# EUROPEAN PATENT APPLICATION

(11) **EP 1 724 626 A1**
(43) Date of publication of application: **22.11.2006**
(21) Application number: 06252458.2
(22) Date of filing: 10.05.2006
(51) Int. Cl.: G02C 5/22

(54) **Frame of a pair of spectacles**

(30) Priority: 16.05.2005 JP 2005142086
(71) Applicant: Nakanishi Optical Corporation, Kita-ku Osaka (JP)
(72) Inventor: Nakanishi, Eiichi, Hyogo (JP)
(74) Representative: Price, Paul Anthony King

(57) **Abstract**

The frame of a pair of multiple-focus spectacles has temples (7) each connected by a vertical swiveling mechanism (8) with a horizontal pivot (30) to a web (5) on the outer side of a forward frame part (4). A retainer built in this mechanism has a pawl (19) adjoining to the frame part (4), and an arcuate row of notches (23, 24, 25) are formed within the temple (7) around the pivot (30) so as to alternatively engage with the pawl (19). A compression spring (27) urges the pawl to be retained in the chosen notch, and the temple (7) can be pulled simply against the spring so that the pawl (19) disengages from one notch (23, 24, 25) and then engages with another notch. Each temple (7) is reliably retained either at one of the downwardly slanted positions or at the normal straight position relative to the frame part (4).

## Description

The present invention relates to a frame of a pair of spectacles, such as multiple-focus spectacles that comprise multiple-focus lenses such as those which each have a short-sight section and a long-sight section.

### BACKGROUND ART

The conventional multiple-focus lens usually consists of an upper half and a lower half, and these halves of different focus distances are consolidated with each other. Such lenses have been installed in a usual spectacles frame, so that a user of this pair of spectacles can look at far objects through the upper long-sight half. In this case, his or her visual line will be directed generally towards the centers of those lenses, without uncomfortably feeling any inconvenience. In contrast, when the lower short-sight half (for presbyopic persons) of such a lens is used, the user has to extremely deflect downwards his or her visual line. This mode of using the conventional multiple-focus lenses has often caused to the users thereof a kind of eye strain.

In some proposals made in view of this drawback, a swiveling mechanism is built in each lateral portion of the forward trame part including the right and left lens rims. This mechanism enables each temple to swivel downwards from it horizontal normal position. By virtue of such a variable angle of the lens rims relative to the temples, the spectacled persons need no longer to remarkably change the direction of their visual lines through the lower short-sight halves (for presbyopic persons). The Patent Documents 1 and 2 recited here disclose such prior proposals concerning the multiple-focus spectacles.

However, it has been reported on the multiple-focus spectacles that the forward frame part (including lens rims) temporarily slanted down by the presbyopic persons relative to the temples had been likely to unintentionally restore its horizontal normal position.
Patent Document 1: Japan Patent Early-Publication No. 58-93029, and
Patent Document 2: Utility Model Early-Publication No. 62-190218

### SUMMARY OF THE INVENTION

There is a need to address the problems summarized above by introducing a novel mechanism such that the forward frame part of a pair of multiple-focus spectacles can be changed in its angle relative to the temples optionally by a simple pulling operation and can also be retained surely at its angular position thus chosen.

As a solution, a frame of a pair of multiple-focus spectacles of the invention comprises as the preamble features: a pair of right-hand and left-hand lens rims, a bridge constituting therewith a forward frame part and connecting an inner portion of the one rim to another inner portion of the other rim, and a swiveling mechanism connecting each of temples to one of outer lateral portions of the forward frame part so that the temples are capable of swiveling down by an angle to a downwardly slanted position from a horizontal and normal straight position of said temples. Characteristically, the frame further comprises a retainer built in the swiveling mechanism such that the temples can be held firmly either at the slanted position or at the normal straight position relative to the forward frame part.

Each retainer may substantially consist of a pawl secured to a portion of the forward frame part, an arcuate row of plural notches formed within a portion of the corresponding temple and around a horizontal pivot of the swiveling mechanism so that the pawl is capable of alternatively engaging with any chosen one of the notches, and a compression spring for urging the pawl to be firmly retained by and in the chosen notch. In operation, the temple may be pulled a distance away from the forward frame part against the compression spring so that the pawl will be disengaged from the previously chosen notch and be subsequently brought into an alternative fitted engagement with another notch. Thus, each temple can be retained surely either at any downwardly slanted position or at the normal straight position relative to the forward frame part.

In much more detail, the retainer may comprise a coupling member adjoining to the outer lateral portion of the forward frame part and having an internal elliptic opening extending rearwards, and the pawl protrudes from the rear end of the coupling member. A cavity is formed in the forward end of the temple so as to receive the coupling member, and the plural notches formed in the rearward wall of the cavity are capable of alternatively engaging with the coupling member. A horizontal pivot fixed in the forward end of the temple does extend through the internal elliptic opening of the coupling member disposed in the cavity. The compression spring held in the elliptic opening always bears against the horizontal pivot. The plural notches are arranged to form an arcuate row around the horizontal pivot so that compression spring will always urge the pawl to remain engaged with any chosen one of said notches. In operation, the temple may be pulled a distance away from the forward frame part against the compression spring so that the pawl will be disengaged from the previously chosen notch and be subsequently brought into an alternative fitted , engagement with another notch. Thus, each temple can be retained surely either at any downwardly slanted position or at the normal straight position relative to the forward frame part.

In the frame of a pair of multiple-focus spectacles as summarized above, the coupling member may serve as one part of the hinge that adjoins to a web integrally protruding from each lateral side of the forward frame part.

According to the present invention, the forward frame part of a pair of multiple-focus spectacles can be swung a small angle relative to the temples by simply pulling the latter. The frame part thus having swiveled can be retained at its altered angular position, without any fear of any unintentional angular displacement relative to the temples. Whether the long-sight section or short-sight section of each lens is chosen, the users can now use the present spectacle frame in a highly comfortable manner.

### BRIEF DESCRIPTION OF THE DRAWINGS

Fig. 1 is a plan view of the principal parts of a frame that is provided herein for a pair of lenses each designed to enable long-sight and short-sight viewing;
Fig. 2 is a front elevation of the frame shown in Fig. 1;
Fig. 3 is an external perspective view of a swiveling mechanism incorporated in the frame shown in Fig. 1, which mechanism enables relative and vertical pivotal motion of relevant members;
Fig. 4a is a side elevation, and Fig. 4b is a fragmentary horizontal cross section, both of the interior of the swiveling mechanism shown in Fig. 3;
Fig. 5a is a side elevation, and Fig. 5b is a plan view, both of a web included in the frame;
Fig. 6a is a side elevation, and Fig. 6b is a plan view, both of a coupling member incorporated in the swiveling mechanism;
Fig. 7a is a side elevation, and Fig. 7b is a plan view, both of a compression spring disposed in combination with a ring in the swiveling mechanism;
Fig. 8a is a side elevation, and Fig. 8b is a plan view, both of the forward end of each temple;
Fig. 9a is a side elevation, and Fig. 9b is a plan view, both of a lid disposed in the forward end of each temple;
Fig. 10a is a side elevation of the swiveling mechanism in operation, wherein the temple has just been pulled away from the forward frame part;
Figs. 10b and 10c are also side elevations of the swiveling mechanism wherein the temple has subsequently been bent downwards by optional and alternative angles;
Fig. 11a is a side elevation of the frame for a pair of long-sight and short-sight viewing lenses, wherein the long-sight one is in use; and
Figs. 11b and 11c are likewise side elevations of the frame for the pair of long-sight and short-sight viewing lenses, wherein the short-sight one is in use.

### THE PREFERRED EMBODIMENTS

Now some embodiments of the present invention will be described referring to the accompanying drawings.

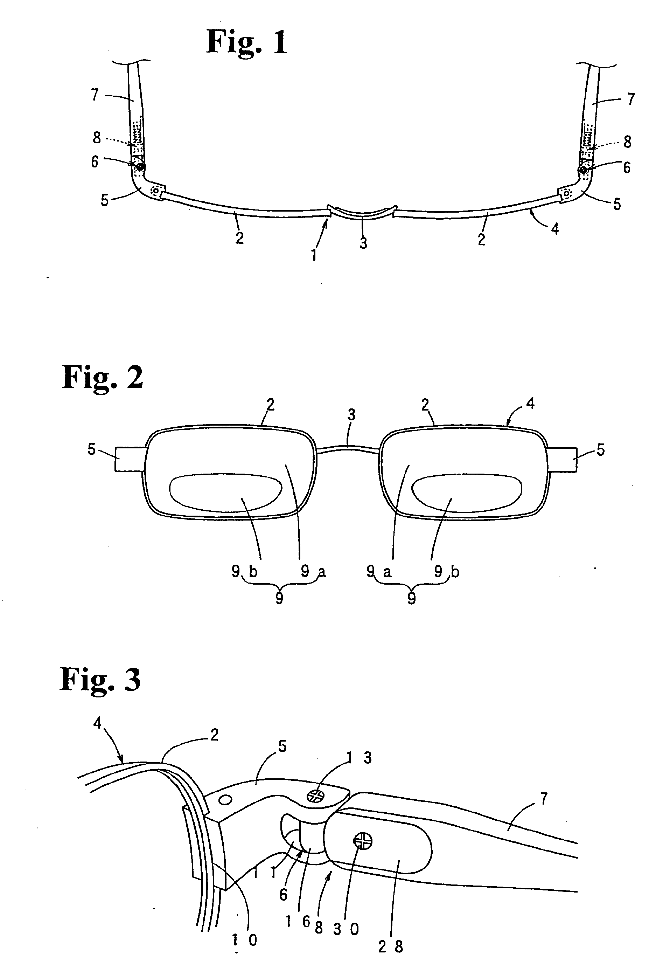

Figs. 1 and 2 show an example of the frame 1 provided herein for combination with a pair of long-sight and short-sight lenses. Similarly to the ordinary spectacle frames, this frame 1 comprises a pair of right-hand and left-hand lens rims 2. A bridge 3 connects the inner portions thereof to each other to form a forward frame part 4. Webs 5 adjoined to the lateral sides of the frame part 4 extend to hinges 6, which in turn are connected to temples 7 thus rendered foldable inwards. However, a characteristic and vertically swiveling mechanism 8 intervenes between each web 5 and the corresponding temple 7. Thus, the temples 7 can be held firmly either at the slanted position or at the normal straight position relative to the forward frame part 4.

Composite lenses 9 consist each of a long-sight viewing section 9a and a short-sight one 9b, with the latter section being integral with the former section and generally disposed below the center thereof.

As seen well in Figs. 3 to 5b, one of the opposite ends of each web 5 is a portion 10 to be secured to the lens rim 2. Formed in the other end of each web 5 are a recess 11 to constitute a hinge 6 and a bore 12 to receive a threaded pivot 13.

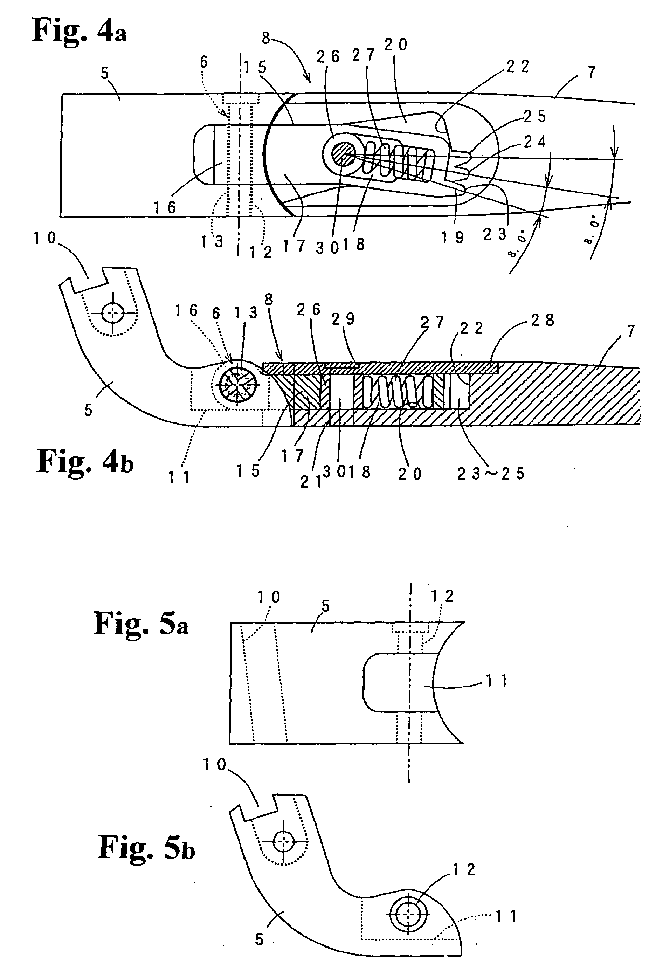

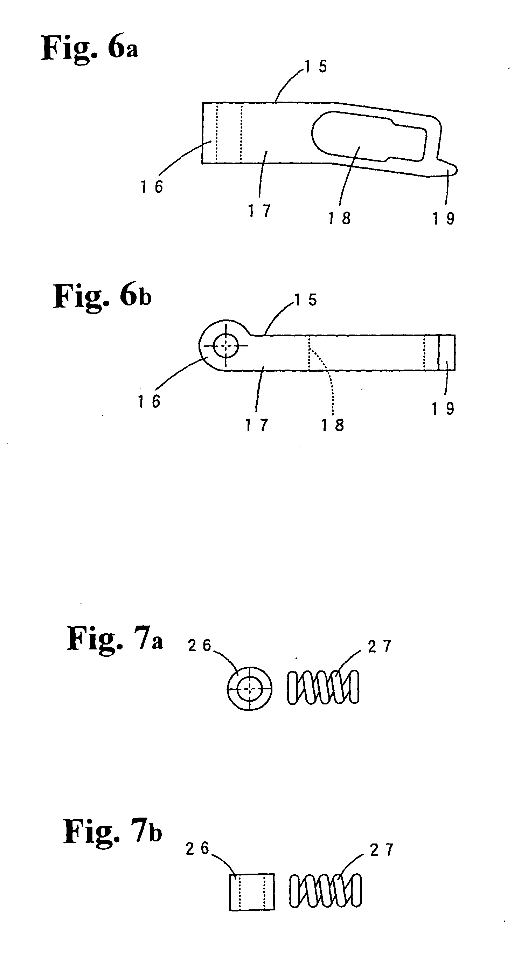

The vertically swiveling mechanism 8 mentioned above does include the recess 11 of web 5 and a coupling member 15 attached to the forward end of temple 7. The coupling member 15 is the principal element of a retainer, and as seen in Figs. 4a, 4b, 6a and 6b, has a cylindrical end 16 to fit in the recess 11. A support arm 17 extends from the one end towards the temple 7. The threaded pivot 13 penetrates the cylindrical end 16 of coupling member 15 and the bore 12, across the recess 11 of web 5, so as to provide the hinge 6.

On the other hand, the support arm 17 extending rearwards (towards the temple) is bent a slight angle at or around its intermediate region between the opposite ends. A generally elliptic opening 18 is formed between the intermediate region and the rearward end of support arm 17, and a pawl 19 protrudes back from this end.

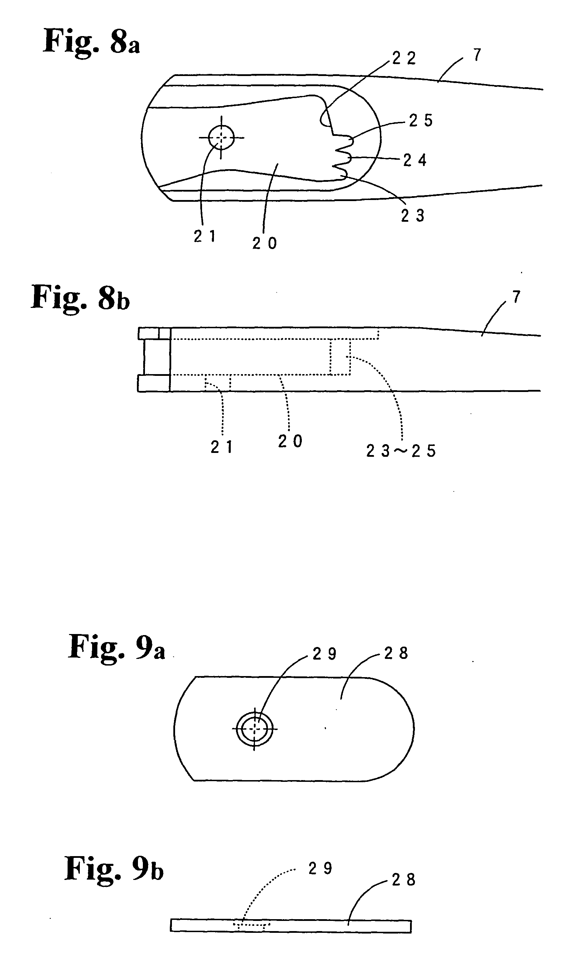

A cavity 20 formed in the forward end of temple 7 as shown in Figs. 8a and 8b does loosely receive the support arm 17 of coupling member 15. A threaded bore 21 penetrates sideways the forward portion adjacent to the end of temple 7, within said cavity. This cavity 20 increases its width towards its rearward end wall 22 where three notches 23, 24 and 25 are engraved for selective and alternative engagement with the pawl 19. In the example shown in the drawings, these notches are arranged to form an arcuate row about the threaded bore 21 at regular angular intervals of 8 (eight) degrees.

Fitted in the elliptic opening 18 of support arm 17 in the cavity 20 are, as shown in Figs. 4a and 4b, a ring 26 for holding the pivot 30 inserted therein and a compression spring 27 cooperative with this ring 26 (see also Figs. 7a and 7b).

The pivot 30 consists of a headed and threaded shank serving also as set screw that fixes to the temple 7 a lid 28 covering the cavity 20 (see Fig. 9a and 9b). The pivot (viz., threaded shank) 30 is inserted into a retaining hole 29 of the lid 28, through the ring 26, and tightened into the threaded bore 21 that opens in the outer side face of temple 7. With the coupling member 15 incorporated in the forward end portion of the temple 7, the pawl 19 of its support arm 17 may engage with any chosen one of notches 23, 24 and 25. Such an engagement of the elements will be kept on due to the urging effect of the compression spring 27 acting on the pivot.

Figs. 4a and 4b show the elements in the ordinary long-sight viewing condition, in which the pawl 19 of coupling member 15 is in an engagement with the notch 23 formed in temple 7. As seen in Fig. 11a, the temple 7 extends straight from the forward frame part 4 such that the lens 9 is at a long-sight viewing position. In other words, the surface of this lens stands generally perpendicular to (but usually oblique by 5 - 10 degrees relative to) the visual line for a long-sight. This visual line generally penetrates the central region of long-sight section 9a of the lens.

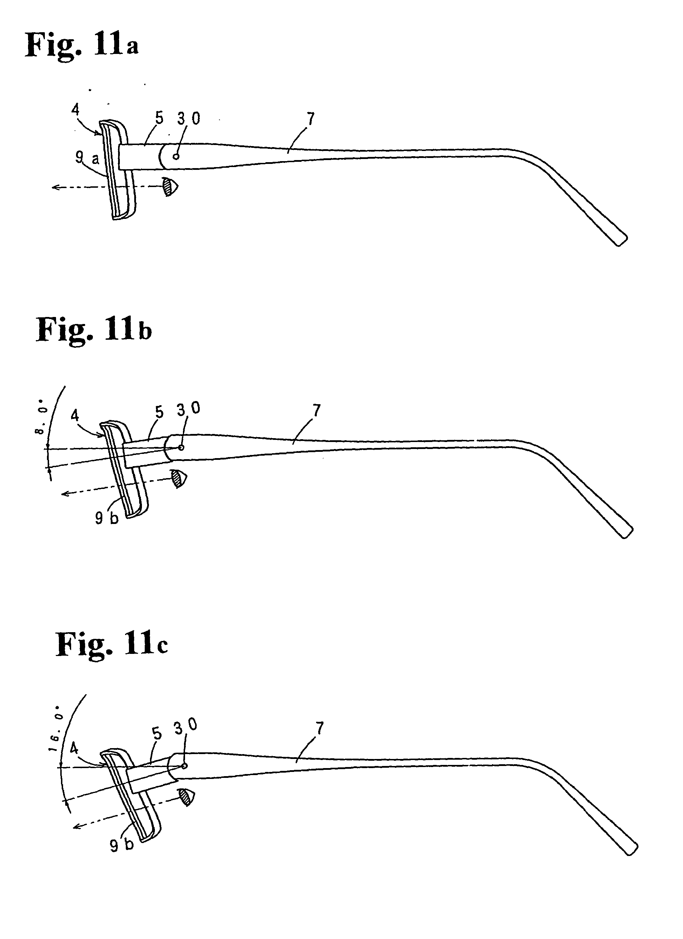

On another occasion of using the short-sight section 9b of the lens in order to see any objects standing or lying near at hand, users' visual lines will lean downwards as seen in Figs. 11b and 11c. Consequently, the (upper area of) lens 9 has to be tilted down such an angle that their visual lines will nevertheless be kept generally perpendicular the surface of lens. The following operation must be done to bring about such a forward tilt of the lens 9.

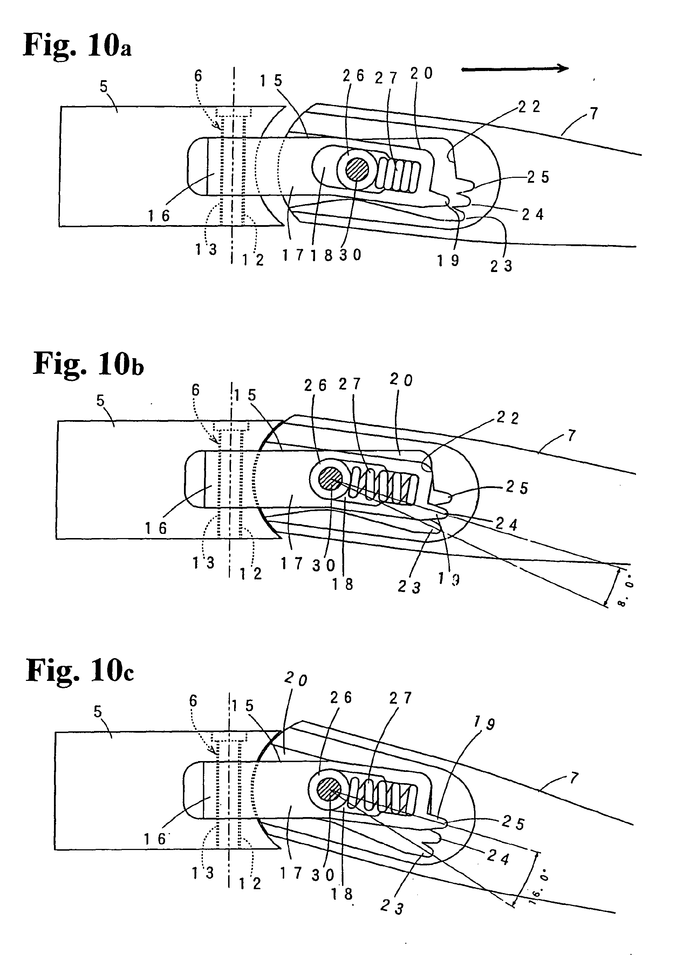

Namely, the temple is to be pulled back at first against the compression spring 27, away from the web 5 attached to forward frame part 4 as seen in Fig. 10a. With the pawl 9 thus having disengaged from the notch 23, a user of this frame should cause the temple 7 to swivel a small angle about the pivot 30 then acting as a fulcrum, before subsequently relaxing his or her grip to cease the pulling action. As a result, the compression spring 27 causes the pawl 19 to come into an alternative engagement with another notch 24 to take a new position shown in Fig. 10b. Thus, the temple 7 will be kept inclined down relative to the frame forward part 4, by an angle (8.0 degrees in the illustrated example). Fig. 11b shows that the (upper area of) lens 9 is inclined in this state by an angle of 8 (eight) degrees, as compared with the case of viewing a long-sight (shown in Fig. 11a). The visual line of the viewer is thus directed generally to the center of short-sight section 9b of the lens and generally perpendicular thereto, whereby the viewers will be protected well from eye strain (viz., asthenopia).

Some persons may need a further adjustment to properly use the short-sight section 9b. On such an occasion, they will increase the inclination angle of lens 9 by pulling and downwardly swiveling the temple 7. As a result, the pawl 19 fits in the third notch 25, also fixing the position of temple 7 relative to the forward frame part 4 as seen in Fig. 10c. Fig. 11c shows that the (upper area of) lens 9 is more inclined in this state by an angle of 16 (sixteen) degrees, as compared with the case of viewing a long-sight (shown in Fig. 11a).

The lens 9 may return from its forwardly tilted position for using the short-sight section 9b to its normal or home position for long-sight shown in Fig. 11a. For this purpose, the temple will be pulled at first similarly to the manner as discussed above so as to disengage the pawl 19 from the notch 24 or 25 and then swing the temple 7 upwards. The pawl thus engages again with the first-mentioned notch 23 so that the temple 7 restores its normal fixation to forward frame part 4.

Whichever usage mode a user takes among those as described above, it is sure that the forward frame part 4 is kept stable on the temple 7 free from any unintentional displacement relative thereto.

In the above embodiment, the spectacle frame 1 has been described for use with the long-sight and short-sight viewing lenses 9. However, the present frame may also be applied to ordinary lenses in order that the vertical inclination angle of lens rims are rendered adjustable to match the visual lines of users of said ordinary lenses.

## Claims

1. A frame of a pair of spectacles comprising:
a forward frame part (4) comprising a pair of right-hand and left-hand lens rims (2), and a bridge (3) connecting an inner portion of one rim (2) to an inner portion of the other rim (2),
a pair of right-hand and left-hand temples (7), and
a swiveling mechanism (8) connecting each of the temples (7) to a respective outer lateral portion of the forward frame part (4) so that the temples are capable of swiveling down by an angle to a downwardly slanted position from a horizontal and normal straight position,
**characterized in that** a retainer is built in the swiveling mechanism (8) such that the temples (7) are capable of being held firmly either at the slanted position or at the normal straight position relative to the forward frame part (4).

2. A frame as defined in claim 1, wherein each retainer substantially consists of:
a pawl (19) secured to a portion of the forward frame part (4),
an arcuate row of plural notches (23, 24, 25) formed within a portion of the corresponding temple (7) and around a horizontal pivot (30) of the swiveling mechanism (8) so that the pawl (19) is capable of alternatively engaging with any chosen one of the notches, and
a compression spring (27) for urging the pawl to be firmly retained by and in the chosen notch,
whereby the temple (7) is capable of being pulled a distance away from the forward frame part (4) against the compression spring (27) so that the pawl (19) disengages from the previously chosen notch (23, 24, 25) and can be subsequently brought into an alternative fitted engagement with another one of the notches, such that each temple (7) is retained either at the or any of the downwardly slanted position(s) or at the normal straight position relative to the forward frame part.

3. A frame as defined in claim 1, wherein the retainer comprises:
a coupling member (15) adjoining to the outer lateral portion of the forward frame part (4) and having an internal elliptic opening (18) extending rearwards,
a pawl (19) protruding from the rear end of the coupling member (15),
a cavity (20) formed in the forward end of the temple (7) so as to receive the coupling member,
plural notches (23, 24, 25) formed in the rearward wall of the cavity (20) and capable of alternatively engaging with the coupling member (15),
a horizontal pivot (30) fixed in the forward end of the temple (7) and extending through the internal elliptic opening (18) of the coupling member disposed in the cavity,
a compression spring (27) held in the elliptic opening and always bearing against the horizontal pivot (30), and
with the plural notches (23, 24, 25) being arranged to form an arcuate row around the horizontal pivot (30) so that compression spring (27) always urges the pawl (19) to remain engaged with any chosen one of said notches (23, 24, 25),
whereby the temple (7) is capable of being pulled a distance away from the forward frame part (4) against the compression spring (27) so that the pawl (19) is disengaged from the previously chosen notch and can be subsequently brought into an alternative fitted engagement with another one of the notches (23, 24, 25), such that each temple (7) is retained either at the or any of the downwardly slanted position(s) or at the normal straight position relative to the forward frame part.

4. A frame as defined in claim 3, wherein the coupling member (15) serves as one of the constituent elements forming a hinge (6) that is secured to either side end of the forward frame part (4).

5. A frame as defined in claim 2, 3 or 4, wherein the plural notches comprise three notches (23, 24, 25), whereby there are two downwardly slanted positions.
